# FASCICULE DE BREVET EUROPEEN

(11) **EP 0 753 964 B1**
(45) Date de publication et mention de la délivrance du brevet: **22.08.2001**
(21) Numéro de dépôt: 96401434.4
(22) Date de dépôt: 28.06.1996
(51) Int. Cl.: H04N 5/92

(54) **Procédé et appareil d'enregistrement et de lecture avec un support d'enregistrement de grande capacité**
Aufnahme- und Wiedergabeverfahren und -vorrichtung mit Aufnahmeträger hoher Kapazität
Procedure and device for recording and reproducing, comprising a high capacity recording carrier

(30) Priorité: 13.07.1995 FR 9508558
(43) Date de publication de la demande: 15.01.1997
(73) Titulaire: THOMSON multimedia, 92648 Boulogne Cédex (FR)
(72) Inventeur: Meunier, Paul Louis, 92050 Paris la Defense Cedex (FR); Artigalas, Max, 92050 Paris la Defense Cedex (FR); Staron, Alain, 92050 Paris la Defense Cedex (FR)
(74) Mandataire: Zhang, Jianguo

(56) Documents cités:
- EP-A- 0 495 480
- EP-A- 0 546 189
- US-A- 5 187 589

## Description

La présente invention concerne un procédé et un appareil d'enregistrement et de lecture d'informations audio et/ou vidéo diffusées sous forme de programmes individuels via un ou plusieurs canaux par voie hertzienne, par satellite ou par réseau câblé.

Les développements récents des techniques audiovisuelles ont abouti, dans un certain nombre de pays, à une offre en programmes de télévision dépassant largement la capacité de visualisation des téléspectateurs. C'est le cas par exemple de la multiplication des chaînes de télévision par satellite, notamment pour des programmes diffusés en numérique, ainsi que par des réseaux câblés. Dans la pratique cependant, le téléspectateur ne regarde qu'un seul programme qu'il a sélectionné tout en enregistrant, s'il le souhaite, un autre programme à l'aide de son magnétoscope.

Or il arrive couramment que plus de deux chaînes proposent simultanément des programmes intéressant le téléspectateur ou d'autres membres de la famille partageant le même téléviseur. Pour résoudre ce problème, on pourrait imaginer que le téléspectateur augmente chez lui le nombre de téléviseurs et de magnétoscopes afin de suivre les programmes de télévision d'un grand nombre de chaînes. Mais une telle solution n'est pas satisfaisante dans la pratique notamment à cause du prix élevé des matériels, leur encombrement et les difficultés de branchement et d'utilisation de ces matériels en parallèle.

Il arrive également que le téléspectateur souhaite enregistrer un certain nombre de programmes de télévision pendant qu'il ne regarde pas la télévision (pendant la journée où il travaille ou pendant la nuit où il se repose). La solution actuelle consiste à programmer le magnétoscope pour enregistrer linéairement dans le temps quelques programmes sélectionnés à l'avance. Il est confronté alors au problème de décalage dans le temps des programmes diffusés par rapport à l'horaire annoncé, ainsi que de capacité d'enregistrement limitée (quelques heures) de la cassette du magnétoscope. Cela limite de façon significative le choix du téléspectateur pour suivre les programmes qui l'intéressent.

Parallèlement à la multiplication des chaînes de télévision diffusées en temps réel, un certain nombre de services annexes sont offerts. C'est le cas par exemple du service appelé "Vidéo à la demande" par lequel le consommateur peut demander un film particulier à un centre serveur qui envoie les images du film demandé au téléviseur du consommateur moyennant paiement. Un tel service demande un serveur de grande capacité et un réseau à large bande pour pouvoir répondre à des demandes simultanées d'une pluralité de consommateurs pour des films différents. Le consommateur est totalement dépendant de l'état de fonctionnement du réseau et du catalogue des films proposés par le serveur.

La demande de brevet européen EP0546 189 A1 divulgue un système d'enregistrement de données qui permet d'enregistrer des signaux analogues provenant de plusieurs canaux. Les signaux analogues sont codés en numérique et enregistrés avec une indexation. Le système permet d'afficher sur un écran de l'information correspondant aux données enregistrées. Les données peuvent être sélectionnées en sélectionnant parmi l'information affichée. Les données sélectionnées sont lues et affichées à l'écran.

Le brevet US 5 187 589 décrit un dispositif d'enregistrement et de lecture video pour bandes magnétiques qui permet d'enregistrer simultanément plusieurs programmes de télévision et de lire le mélange de programmes enregistrés pour en extraire un et le restituer.

La présente invention a pour objet de proposer une technique permettant au consommateur d'avoir chez lui un appareil ayant une grande capacité d'enregistrement et qui constitue une sorte de réservoir de la vidéo et/ou de l'audio personnel.

Un autre objet de l'invention est d'offrir au consommateur un service de la vidéo à la demande authentique par lequel il maîtrise totalement la sélection et la visualisation des programmes à partir de son réservoir de la vidéo.

L'invention a également pour objet de permettre au diffuseur de programmes de rentabiliser les diffusions en contrôlant l'accès aux programmes vidéo et/ou audio enregistrés dans l'appareil du consommateur, et/ou en cryptant les programmes diffusés.

L'invention a en outre pour objet de permettre au consommateur de contrôler l'accès au réservoir de la vidéo et/ou de l'audio par son code individuel d'accès, et/ou de contrôler les dépenses liées au décryptage de certains des programmes enregistrés en ne choisissant de visualiser ou d'écouter que des programmes qui l'intéressent.

L'invention a encore pour objet de proposer au consommateur la possibilité de constituer une vidéothèque et/ou une audiothèque dans son appareil dont le contenu est contrôlé par le consommateur.

L'invention a encore pour objet de proposer un réservoir de la vidéo et/ou de l'audio dont le contenu est régulièrement mis à jour par les diffuseurs, le consommateur pouvant regarder un ou plusieurs programmes enregistrés pendant la mise à jour du contenu de son réservoir de la vidéo et/ou de l'audio.

Le procédé selon l'invention permet l'enregistrement et la lecture d'informations audio et/ou vidéo diffusées sous forme de programmes individuels via un ou plusieurs canaux par voie hertzienne, par satellite ou par réseau câblé. Le procédé comprend les étapes suivantes :
- sélectionner un ou plusieurs canaux de diffusion à recevoir;
- coder en numérique les signaux reçus;
- enregistrer les signaux numériques codés sur un support d'enregistrement de grande capacité;
- attribuer une indexation sur le support d'enregistrement pour chaque programme individuel enregistré;
- créer au moins un menu de programmes enregistrés;
- sélectionner un ou plusieurs programmes à partir d'un menu de programmes enregistrés affiché sur un écran de visualisation;
- lire le ou les programmes sélectionnés;
- traiter les signaux numériques de lecture du ou des programmes sélectionnés ;
- reproduire les informations correspondantes audio et/ou vidéo ; et
- rendre les étapes d'enregistrement et de lecture indépendantes l'une de l'autre, de façon à permettre la lecture d'un programme enregistré tout en enregistrant un ou plusieurs autres programmes.

Le procédé peut comporter une étape de contrôle d'accès pour permettre la lecture d'au moins un des programmes enregistrés. L'utilisation d'un ou de plusieurs codes d'accès permet de moduler l'accès aux programmes enregistrés selon des critères établis par des diffuseurs d'un côté et par le consommateur de l'autre. En effet, les diffuseurs peuvent ainsi, en contrôlant l'accès à un certain type de programmes, moduler le montant de l'abonnement que le consommateur doit payer pour avoir accès à ces programmes. Il en est de même lorsque plusieurs diffuseurs offrent des programmes avec des abonnements indépendants d'un diffuseur à l'autre. Du côté consommateur, le code d'accès lui permet d'interdire entièrement l'accès au service par d'autres personnes. Il peut également interdire l'accès à des programmes destinés aux adultes par des enfants.

Le procédé de l'invention offre également la possibilité d'enregistrer les programmes cryptés et de les décrypter à la lecture en vue de leur reproduction sonore et/ou visuelle grâce à l'identification d'un code spécifique. Un tel service permet au consommateur de moduler ses dépenses pour le décryptage de certains des programmes enregistrés. En effet, le code spécifique peut être constitué par un numéro de sa carte bancaire. Il paie ainsi chaque fois qu'il a besoin de décrypter un programme.

Avantageusement, les étapes d'enregistrement et de lecture sont rendues indépendantes l'une de l'autre, de façon à permettre la lecture d'un ou de plusieurs programmes enregistrés tout en enregistrant un ou plusieurs autres programmes. Le consommateur peut ainsi mettre à jour constamment le contenu de son réservoir de la vidéo et/ou de l'audio.

De préférence, le procédé permet de verrouiller, à la demande du consommateur, un ou plusieurs programmes enregistrés contre l'effacement direct. Ainsi, le consommateur peut créer une collection personnelle de programmes enregistrés. Pour effacer un tel programme de collection, il est nécessaire de déverrouiller le programme enregistré et ensuite effectuer son effacement du support d'enregistrement.

Avantageusement, le procédé permet d'enregistrer et/ou lire parallèlement et simultanément plusieurs programmes, afin d'offrir au consommateur une mise à jour plus rapide de son réservoir de la vidéo et/ou de l'audio, ainsi qu'une plus grande flexibilité de reproduction des programmes enregistrés par exemple à l'aide de plusieurs téléviseurs parallèles pour la visualisation simultanée de plusieurs programmes enregistrés. Il en est de même pour des programmes audio. Plusieurs personnes de la famille peuvent ainsi visualiser ou écouter des programmes enregistrés de façon indépendante dans plusieurs pièces différents.

Pour mettre en oeuvre le procédé de l'invention, un appareil d'enregistrement et de lecture, désigné sous le nom "réservoir de la vidéo et/ou de l'audio" est proposé. Cet appareil comprend :
- des moyens de réglage de fréquences permettant la réception d'un canal ou plusieurs canaux de diffusion simultanément;
- des moyens de codage numérique des signaux reçus;
- des moyens d'enregistrement et de lecture des signaux numériques codés;
- des moyens de commande permettant de gérer indépendamment l'enregistrement et la lecture des programmes et des moyens de traitement des signaux de lecture en vue de leur reproduction sonore et/ou visuelle (avec éventuellement la possibilité de lire et reproduire parallèlement plusieurs programmes enregistrés de façon simultanée et indépendante l'une de l'autre).

Le moyen d'enregistrement et de lecture doit comprendre un support d'enregistrement de grande capacité pour pouvoir constituer ce "réservoir". Le réservoir doit être capable de stocker un grand nombre de programmes vidéo et/ou audio (musique, informations, conférences...).

On connaît par les brevets français N° 2 630 853, N° 2 656 723 et N° 2 699 724 une technique d'enregistrement et de lecture sur une bande magnétique permettant une grande capacité de stockage d'informations. Schématiquement, la technique utilise une bande magnétique qui défile devant une tête statique d'enregistrement composée d'une matrice de N x M éléments d'enregistrements individuels (N≥2 et M≥1). La tête statique d'enregistrement peut grâce à des protocoles d'excitation des éléments individuels d'enregistrement, enregistrer sur la bande magnétique jusqu'à N pistes parallèles d'informations. Pour la lecture de la bande magnétique, une tête statique magnéto-optique permet de projeter sur la bande magnétique une lumière polarisée qui grâce à l'effet KERR change de polarisation optique une fois réfléchie de la bande magnétique selon la polarisation magnétique des pistes éclairées. Un capteur traduit la lumière polarisée réfléchie en un train de nombres binaires représentant le contenu de l'information enregistrée sur les N pistes parallèles. Les brevets précités contiennent de plus amples informations sur la technique concernée qui permet, grâce à l'enregistrement à tête matricielle et la lecture en N pistes parallèles sur la bande magnétique, d'enregistrer et de lire plusieurs programmes simultanément et indépendamment les uns des autres, et d'augmenter la capacité de stockage d'une cassette de bande magnétique 8mm jusqu'à une centaine d'heures de programme vidéo.

Il est également possible d'utiliser la technique de la cassette vidéo numérique pour constituer le réservoir de la vidéo et/ou de l'audio. La technique consiste à enregistrer et lire des informations sur une bande magnétique à l'aide d'une tête tournante. Grâce à la compression numérique, la cassette est capable de stocker jusqu'à quelques dizaines d'heures de programmes vidéo. Etant donné que le débit d'enregistrement et de lecture sur la cassette est plusieurs fois supérieur au débit de diffusion de programmes vidéo par canal (1 à 8 Mbits/s), il est possible de concevoir l'enregistrement en parallèle de plusieurs programmes grâce à un protocole spécifique de multiplexage, et la lecture de ces programmes en parallèle grâce à un protocole de démultiplexage. Le consommateur peut visualiser un programme ou plusieurs programmes qui sont lus en parallèles.

L'invention sera mieux comprise et d'autres avantages apparaîtront à l'étude de la description détaillée d'un mode de réalisation pris à titre nullement limitatif et illustré par des dessins annexés, sur lesquels :
- la figure 1 est d'une vue synoptique d'un appareil d'enregistrement et de lecture d'informations audio et/ou vidéo selon l'invention, et
- les figures 2A et 2B montrent schématiquement les interventions du consommateur pour gérer le contenu du support d'enregistrement de l'appareil de la figure 1.

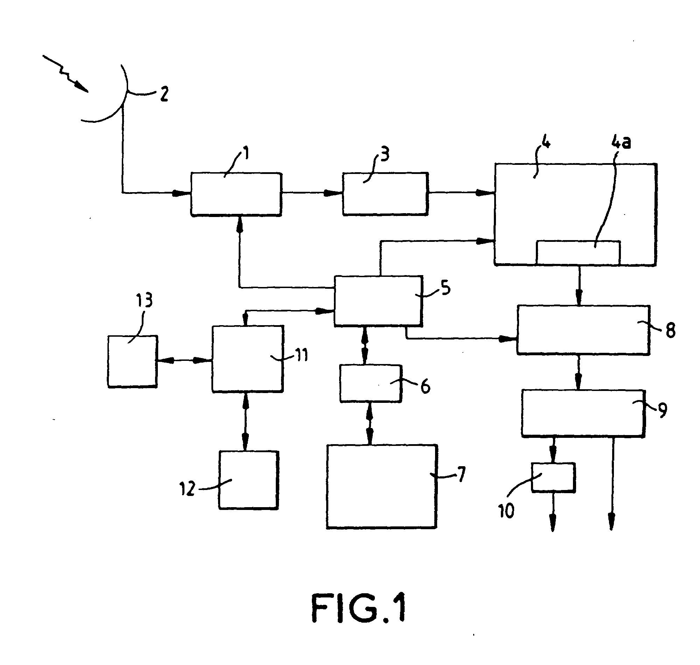

L'appareil de l'invention peut être intégré dans un décodeur de télévision ou dans un téléviseur. Comme illustré sur la figure 1, l'appareil de l'invention comprend des moyens de réglage de fréquences 1 capable de fournir des signaux en provenance d'un canal ou de plusieurs canaux en parallèle, les canaux étant captés par une antenne 2 dans le cas d'une diffusion par voie hertzienne ou par satellite, ou étant fournis par un réseau câblé. Les moyens de réglage de fréquences 1 peuvent comprendre un ou plusieurs "tuners" analogiques et/ou numériques, de façon à fournir plusieurs canaux de programmes en parallèle. Les signaux issus des moyens de réglages de fréquences 1 sont traités par des moyens de codage numérique 3 lesquels convertissent au besoin les signaux analogiques en signaux numériques et assurent éventuellement la compression numérique et/ou multiplexage des signaux reçus. Les signaux numériques codés sont ensuite envoyés à des moyens d'enregistrement et de lecture 4 pour être enregistrés sur un support d'enregistrement de grande capacité 4a. Des moyens de commande 5, en interaction avec un module d'interface utilisateur 6 (sous forme de touches intégrées à l'appareil ou sous forme de télécommande), permettent à l'usager de commander les moyens de réglage de fréquences 1 et les moyens d'enregistrement et de lecture 4.

Comme indiqué précédemment, les moyens d'enregistrement et de lecture 4 peuvent utiliser la technique d'enregistrement magnétique à tête matricielle ou la technique de vidéo cassettes numériques (auquel cas les moyens de codage numérique 3 assurent le multiplexage si au moins deux canaux sont à enregistrer en parallèle sur le support d'enregistrement 4a).

Les moyens de commande 5 permettent de créer une indexation des programmes enregistrés sur le support d'enregistrement 4a, ainsi qu'un ou plusieurs menus des programmes enregistrés. A l'aide d'un écran de visualisation 7, l'usager peut consulter le ou les menus des programmes enregistrés et interagir avec les moyens de commande 5 à l'aide du module d'interface utilisateur 6. Des moyens de décryptage 8 sont prévus pour permettre le décryptage des programmes diffusés et enregistrés sur le support d'enregistrement 4a sous forme cryptée, l'ordre de décryptage étant envoyé par les moyens de commande 5. Les signaux de lecture sont traités numériquement par des moyens de décodage numérique 9 qui assurent la décompression et/ou le démultiplexage pour restituer les programmes parallèles et indépendants l'un de l'autre. Les signaux issus des moyens de décodage numérique 9 peuvent être numériques ou convertis en analogiques à l'aide d'un convertisseur numérique/analogique 10 en vue de reproduction du ou des programmes correspondants à l'aide des appareils appropriés (téléviseurs, chaînes hi-fi ou autres).

Les moyens de commande 5 permettent de contrôler les fonctions "avance rapide", "rembobinage rapide", "pause", "stop", "lecture rapide", etc. lors de la lecture d'un programme enregistré. Le support d'enregistrement 4a est avantageusement sous forme de cassette extractible des moyens d'enregistrement et de lecture 4. Il est également possible de gérer plusieurs cassettes comme support d'enregistrement 4a dans les moyens d'enregistrement et de lecture 4, afin d'augmenter encore d'avantage la capacité de stockage de l'appareil.

Les moyens de commande 5 peuvent inclure une unité de contrôle d'accès par laquelle l'autorisation de lecture de certains des programmes enregistrés n'est donnée que si un ou plusieurs codes d'accès introduits par l'usager via le module d'interface utilisateur 6 sont corrects. L'écran de visualisation 7 peut être un écran de téléviseur auquel l'appareil d'enregistrement et de lecture est intégré ou relié. On peut également envisagé de construire l'appareil avec l'écran 7 incorporé. Dans ce cas, on peut envisager l'écran 7 du type tactile sur lequel l'usager peut exercer des pressions tactiles afin d'interagir avec les moyens de commande 5 (le module d'interface utilisateur 6 étant dans ce cas combiné à l'écran de visualisation 7). L'écran tactile 7 peut être réalisé à l'aide d'un écran à cristaux liquides.

L'appareil peut comprendre un module de gestion de paiement 11 qui est relié à un lecteur de carte à puces 12, à un modem 13 et aux moyens de commande 5. dans le cas où l'usager souhaite regarder un programme crypté, il introduit un code spécifique qui est contenu par exemple dans sa carte bancaire lue par le lecteur 12. Le module de gestion de paiement 11 communique alors avec un centre serveur, non représenté, via le modem 13 qui valide la transaction monétaire. Le module de gestion de paiement 11 informe alors les moyens de commande 5 pour qu'ils déclenchent le décryptage du programme par les moyens 8. L'usager peut alors regarder le programme correspondant sans cryptage.

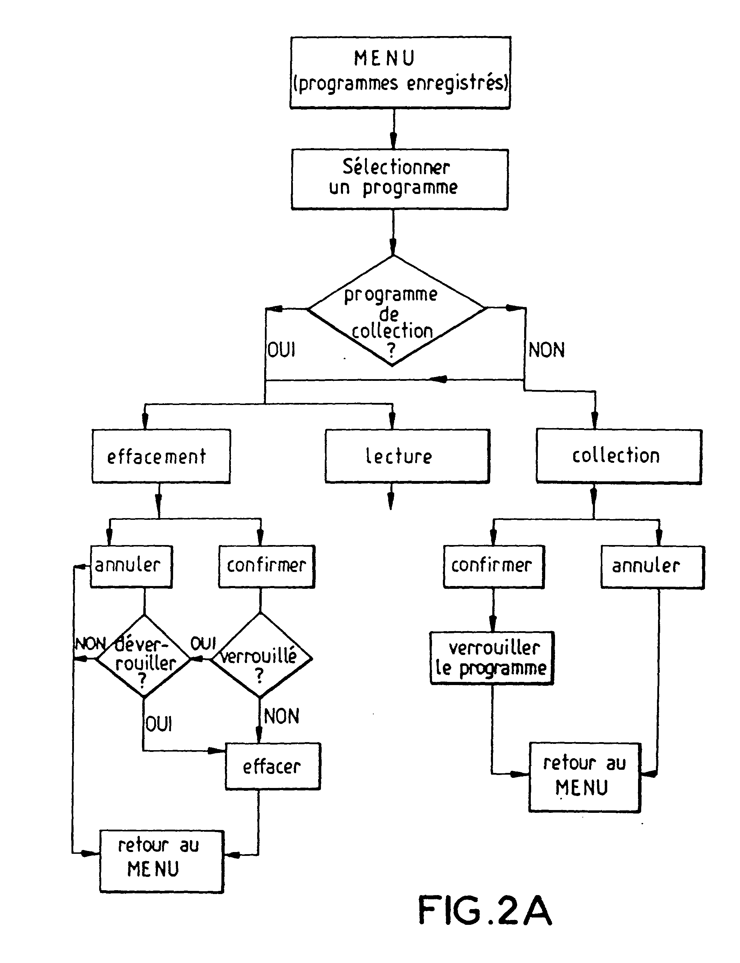

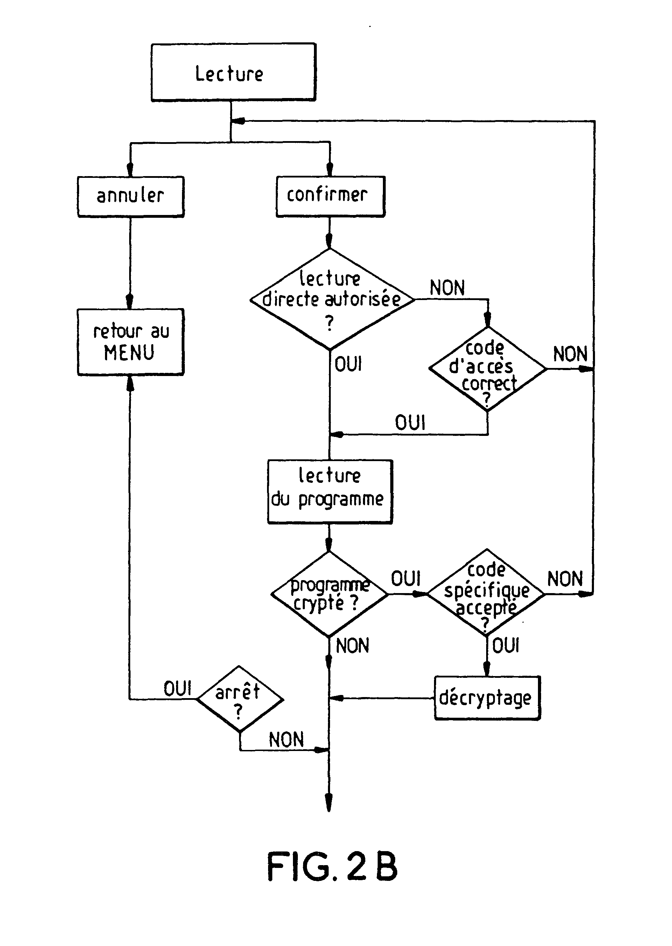

Dans l'exemple montré sur les figures 2A et 2B, un menu des programmes enregistrés est affiché sur l'écran de visualisation 7. Il est évidemment possible d'avoir plusieurs menus des programmes enregistrés classés par exemple par thèmes (sport, débat, film, théâtre, etc...) ou par genres (pour les films par exemple : action, romantique, policier, etc...). A l'aide du module d'interface utilisateur 6, l'usager peut sélectionner un programme particulier dans le menu.

Les moyens de commande 5 vérifient alors si le programme sélectionné fait partie de la collection privée de l'usager (cela signifie que le programme est protégé par une clé de verrouillage). Si le programme est déjà verrouillé, l'écran suivant propose alors deux options : "effacement" ou "lecture". Dans le cas contraire, l'écran suivant propose en plus de "effacement" et "lecture", l'option "collection" par laquelle l'usager peut classer ce programme dans sa collection privée en y associant une clé de verrouillage via les moyens de commande 5.

Si l'option "effacement" est choisie, l'écran suivant demande à l'usager de "confirmer" ou "annuler" l'option (pour éviter une sélection par erreur de l'option "effacement"). Si l'usager sélectionne "annuler", on retourne alors au menu de départ avant la sélection du programme. Si l'usager opte pour "confirmer", l'appareil procède à l'effacement du programme si celui-ci n'est pas verrouillé par une clé de verrouillage. Dans le cas contraire, l'usager peut effacer le programme après avoir déverrouillé le programme via les moyens de commande 5 ou ne pas effacer le programme s'il veut le conserver à ce stade. On retourne alors au menu de départ.

Si l'option "collection" est choisie, l'écran suivant propose à l'usager deux options : "confimer" ou "annuler". Lorsque l'usager confirme l'option "collection", les moyens de commande 5 attribue une clé de verrouillage au programme pour le verrouiller contre l'effacement direct. On retourne alors au menu de départ. Si l'option "annuler" est choisie, on retourne directement au menu de départ.

Si l'option "lecture" est choisie (figure 2B), l'écran suivant propose également deux options : "annuler" ou "confirmer". Si l'usager choisit "annuler", on retourne au menu de départ. Si l'usager choisit "confirmer", les moyens de commande 5 vérifient si la lecture directe du programme sélectionné est autorisée. Si la réponse est positive, la lecture du programme est effectuée, sinon l'usager doit introduire un code d'accès correct pour déclencher la lecture du programme. Dans le cas où le code d'accès n'est pas accepté, on retourne à l'écran proposant les sous options "confirmer" et "annuler" de l'option "lecture". Si le programme est crypté, l'usager s'en aperçoit et introduit un code spécifique (une carte bancaire par exemple) qui, après vérification, donne droit au décryptage du programme. Si le code spécifique n'est pas accepté, on retourne aux sous options "confirmer" et "annuler" de l'option "lecture". Si l'usager arrête le processus de lecture via le module d'interface utilisateur 6, on retourne au menu de départ.

Parmi les applications possibles de l'invention, on peut citer la constitution d'une vidéothèque, d'une audiothèque ou des deux simultanément pour l'usager qui peut ainsi s'offrir une authentique vidéo à la demande et/ou audio à la demande à partir du contenu des programmes enregistrés.

Pour l'application vidéothèque avec l'utilisation de la technologie d'enregistrement magnétique à tête matricielle qui permet à une bande magnétique (sous forme de cassette de 8 mm) de stocker plusieurs dizaines de films, on peut envisager par exemple le service suivant avec le réservoir de la vidéo capable de stocker 50 films. Le premier jour d'utilisation, les 50 films classés comme les films les plus demandés (Top 50) sont diffusés (en utilisant 4 canaux parallèles ou un transpondeur satellite pendant un jour) et stockés dans l'appareil d'enregistrement et de lecture de l'invention. L'enregistrement est effectué avec des films cryptés permettant au diffuseur de contrôler de façon modulée le paiement pour la visualisation des films (paiement par film, paiement par journée de visualisation, etc...) : les films sont à la maison mais pas encore payés pour être visualisés correctement. L'usager peut accéder instantanément au film choisi parmi les 50 enregistrés après avoir payé pour le décryptage.

Il peut regarder le film avec les fonctions avance rapide, rembobinage rapide, pause, stop etc... comme un magnétoscope. L'usager peut constituer une collection personnelle des films dans le réservoir de la vidéo en les protégeant par une clé de verrouillage. Chaque fois qu'un nouveau film est diffusé, celui-ci efface l'un des 50 films contenus dans le réservoir de la vidéo hors collection pour prendre la place ainsi libérée. Le service met à jour de façon permanente la liste des films Top 50 et envoie cette liste mise à jour une fois par semaine ou une fois par mois pour les abonnés.

Le service proposé peut également diffuser d'autres films (1000 films par exemple représentant 20 jours de diffusion avec 4 canaux ou un transpondeur) de façon à ce que l'usager puisse constituer sa vidéothèque avec ses choix personnels. Il peut avoir dans son réservoir de la vidéo, par exemple, 20 films qu'il préfère généralement (Top 20) régulièrement mis à jour, et 10 films préférés (Top 10) pour chacun des trois thèmes différents (aventure, science-fiction, dramatique).

On peut également envisager une application de l'invention pour constituer une audiothèque pour le consommateur à l'aide de son réservoir de l'audio. Un service de téléchargement électronique de musique peut être mis en place à l'aide d'un transpondeur (24 Mbits/s) par exemple, capable de transmettre le contenu d'un disque compact (150 Moctets) en 50 secondes. Cela signifie que le transpondeur est capable de diffuser de la musique équivalente au contenu de plus de 1700 disques compacts par jour. Avec une capacité de stockage de 60 giga octets, le réservoir de l'audio peut stocker en permanence l'équivalent de 400 disques compacts. La mise à jour du contenu du réservoir peut être faite au choix par l'usager.

## Revendications

1. Procédé d'enregistrement et de lecture d'informations audio et/ou vidéo diffusées sous forme de programmes individuels via un ou plusieurs canaux par voie hertzienne, par satellite ou par réseau câblé, consistant à :
- sélectionner un ou plusieurs canaux de diffusion à recevoir,
- coder en numérique les signaux reçus,
- enregistrer les signaux numériques codés sur un support d'enregistrement de grande capacité,
- attribuer une indexation sur le support d'enregistrement pour chaque programme individuel enregistré,
- créer au moins un menu de programmes enregistrés,
- sélectionner un ou plusieurs programmes à partir d'un menu de programmes enregistrés affiché sur un écran de visualisation,
- lire le ou les programmes sélectionnés,
- traiter les signaux numériques de lecture du ou des programmes sélectionnés, et
- reproduire les informations correspondantes audio et/ou vidéo,
caractérisé en ce qu'il consiste à rendre les étapes d'enregistrement et de lecture indépendantes l'une de l'autre, de façon à permettre la lecture d'un programme enregistré tout en enregistrant un ou plusieurs autres programmes.

2. Procédé selon la revendication 1, caractérisé en ce qu'il consiste à introduire un code d'accès pour permettre la lecture d'au moins l'un des programmes enregistrés.

3. Procédé selon la revendication 1 ou 2 et dans le cas où au moins une partie des programmes reçus sont cryptés, caractérisé en ce qu'il consiste à :
- enregistrer lesdits programmes sous leur forme cryptée,
- introduire un code spécifique pour permettre le décryptage d'au moins certains desdits programmes à la lecture en vue de leur reproduction sonore et/ou visuelle.

4. Procédé selon l'une des revendications précédentes, caractérisé en ce qu'il consiste à attribuer une clé de verrouillage pour empêcher l'effacement direct de certains des programmes enregistrés.

5. Procédé selon l'une des revendications précédentes, caractérisé en ce qu'il consiste à enregistrer et à lire des programmes vidéo et/ou des programmes audio.

6. Procédé selon l'une des revendications précédentes, caractérisé en ce qu'il consiste à enregistrer parallèlement et simultanément plusieurs programmes sur le support d'enregistrement.

7. Procédé selon la revendication 6, caractérisé en qu'il consiste à reproduire plusieurs programmes simultanément.

8. Appareil d'enregistrement et de lecture spécialement conçu pour la mise en oeuvre du procédé selon l'une des revendications précédentes, comprenant :
- des moyens de réglage de fréquences (1) permettant la réception d'un ou plusieurs canaux de diffusion simultanément,
- des moyens de codage numérique (3) des signaux reçus,
- des moyens d'enregistrement et de lecture des signaux numériques codés,
- des moyens de traitement (8,9) des signaux issus de la tête de lecture en vue de leur reproduction sonore et/ou visuelle,
caractérisé en ce qu'il comprend,
- des moyens de commande (5) permettant de gérer indépendamment l'enregistrement et la lecture des programmes,
et en ce que les moyens d'enregistrement et de lecture (4) des signaux numériques codés comporte un support d'enregistrement (4a) sous forme d'au moins une bande magnétique à N pistes longitudinales parallèles (N>2), une tête matricielle d'enregistrement magnétique composée de N X M éléments d'enregistrement (M>1), et une tête de lecture magnéto-optique capable de lire les N pistes simultanément.

9. Appareil selon la revendication 8, caractérisé en ce qu'il comprend des moyens de contrôle d'accès (5) pour permettre la lecture d'au moins une partie des programmes enregistrés après identification d'un code d'accès.

10. Appareil selon la revendication 8 ou 9, caractérisé en ce qu'il comprend des moyens assurant le décryptage (8) de certains des programmes enregistrés sous forme cryptée après identification d'un code spécifique.

11. Appareil selon l'une des revendications 8 à 10, caractérisé en ce que les moyens de commande (5) génèrent une clé de verrouillage, à la demande de l'usager, pour empêcher l'effacement direct de certains des programmes enregistrés.

12. Appareil selon l'une des revendications 8 à 11, caractérisé en ce qu'il comprend un écran tactile (7) sur lequel peut être affiché un ou plusieurs menus générés par les moyens de commande (5) indiquant les titres et éventuellement les thèmes des programmes enregistrés, l'usager pouvant sélectionner et commander l'appareil directement par le biais de l'écran tactile.

13. Appareil selon l'une des revendications 8 à 12, caractérisé en ce que la bande magnétique d'enregistrement (4a) est extractible de l'appareil.

14. appareil selon l'une des revendications 8 à 13, caractérisé en ce que les moyens de traitement (9) des signaux de lecture fournissent parallèlement au moins deux programmes qui sont reproduits indépendamment l'un de l'autre.

15. Décodeur de réception de télévision caractérisé en ce qu'il intègre dans son boîtier, un appareil d'enregistrement et de lecture selon l'une des revendications 8 à 14.

16. Téléviseur caractérisé en ce qu'il intègre un appareil d'enregistrement et de lecture selon l'une des revendications 8 à 14.

## Patentansprüche

1. Verfahren zur Aufzeichnung und Wiedergabe von Audio- und/oder Video-Informationen, die in der Form von individuellen Programmen über ein oder mehrere Kanäle durch Rundfunk, Satelliten oder ein Kabelnetz gesendet werden, mit folgenden Schritten:
- Auswahl eines oder mehrerer Sendekanäle für den Empfang,
- digitale Kodierung der empfangenen Signale,
- Aufzeichnen der digitalen, kodierten Signale auf einem Aufzeichnungsträger großer Kapazität,
- Zuordnung einer Bezeichnung auf dem Aufzeichnungsträger zu jedem individuellen aufgezeichneten Programm,
- Bilden wenigstens eines Menüs mit aufgezeichneten Programmen,
- Auswahl eines oder mehrerer Programme aus einem auf einem Bildschirm dargestellten Menü mit aufgezeichneten Programmen,
- Lesen des oder der ausgewählten Programme,
- Verarbeiten der digitalen Signale für das Lesen des oder der ausgewählten Programme und
- Wiedergabe der entsprechenden Audio- und/oder Video-Informationen,
dadurch gekennzeichnet, daß
die Schritte der Aufzeichnung und der Wiedergabe derart unabhängig voneinander gestaltet werden, daß die Wiedergabe eines aufgezeichneten Programms gleichzeitig möglich ist, während ein oder mehrere andere Programme aufgezeichnet werden.

2. Verfahren nach Anspruch 1, dadurch gekennzeichnet, daß ein Zugriffscode eingeführt wird, um die Wiedergabe wenigstens eines der aufgezeichneten Programme zu ermöglichen.

3. Verfahren nach Anspruch 1 oder 2 für den Fall, wo wenigstens ein Teil der empfangenen Programme verschlüsselt ist, gekennzeichnet durch folgende Schritte:
- Aufzeichnen der Programme in ihrer verschlüsselten Form,
- Einführung eines speziellen Codes, um die Entschlüsselung wenigstens bestimmter Programme bei der Wiedergabe im Hinblick auf ihre Ton- und/oder Bildwiedergabe zu ermöglichen.

4. Verfahren nach einem der vorangehenden Ansprüche, dadurch gekennzeichnet, daß ein Verriegelungsschlüssel zugeordnet wird, um die direkte Löschung bestimmter aufgezeichneter Programme zu verhindern.

5. Verfahren nach einem der vorangehenden Ansprüche, dadurch gekennzeichnet, daß Videoprogramme und/oder Audioprogramme aufgezeichnet und wiedergegeben werden.

6. Verfahren nach einem der vorangehenden Ansprüche, dadurch gekennzeichnet, daß mehrere Programme parallel und gleichzeitig auf dem Aufzeichnungsträger aufgezeichnet werden.

7. Verfahren nach Anspruch 6, dadurch gekennzeichnet, daß mehrere Programme gleichzeitig wiedergegeben werden.

8. Vorrichtung zur Aufzeichnung und Wiedergabe, die speziell für die Durchführung des Verfahrens nach einem der vorangehenden Ansprüche ausgebildet ist, mit folgenden Merkmalen:
- Mittel zur Frequenzabstimmung (1), die den gleichzeitigen Empfang eines oder mehrerer Sendekanäle ermöglichen,
- Mittel (3) zur digitalen Kodierung der empfangenen Signale,
- Mittel zur Aufzeichnung und Wiedergabe der kodierten digitalen Signale,
- Mittel (8, 9) zur Verarbeitung der von dem Lesekopf gelieferten Signale für ihre Ton- und/oder Bildwiedergabe,
gekennzeichnet durch folgende Merkmale:
- Steuermittel (5), die die Aufzeichnung und die Wiedergabe der Programme unabhängig voneinander ermöglichen,
wobei die Mittel (4) zur Aufzeichnung und Wiedergabe der kodierten digitalen Signale einen Aufzeichnungsträger (4a) in der Form wenigstens eines Magnetbandes mit N parallelen Längsspuren (N>2), einen Mehrspurkopf zur magnetischen Aufzeichnung aus N X M Aufzeichnungselementen (M>1) und einen zum gleichzeitigen Lesen der N Spuren geeigneten magneto-optischen Lesekopf enthalten.

9. Vorrichtung nach Anspruch 8, gekennzeichnet durch Zugriff-Steuermittel (5), um das Lesen wenigstens eines Teils der aufgezeichneten Programme nach der Erkennung eines Zugriffcodes zu ermöglichen.

10. Vorrichtung nach Anspruch 8 oder 9, gekennzeichnet durch Mittel (8) zum Entschlüsseln bestimmter, in verschlüsselter Form aufgezeichneter Programme nach der Erkennung eines speziellen Codes.

11. Vorrichtung nach einem der Ansprüche 8 bis 10, dadurch gekennzeichnet, daß die Steuermittel (5) auf Anforderung des Benutzers einen Verriegelungsschlüssel erzeugen, um die direkte Löschung bestimmter aufgezeichneter Programme zu verhindern.

12. Vorrichtung nach einem der Ansprüche 8 bis 11, gekennzeichnet durch einen Berührungsschirm (7), auf dem ein oder mehrere durch die Steuermittel (5) erzeugte Menüs darstellbar sind, die die Titel und gegebenenfalls die Themen der aufgezeichneten Programme anzeigen, wobei der Benutzer die Vorrichtung direkt durch Berührung des Berührungsschirms auswählen und steuern kann.

13. Vorrichtung nach einem der Ansprüche 8 bis 12, dadurch gekennzeichnet, daß das Magnetband (4a) für die Aufzeichnung von der Vorrichtung entnommen werden kann.

14. Vorrichtung nach einem der Ansprüche 8 bis 13, dadurch gekennzeichnet, daß die Verarbeitungsmittel (9) für die Signale bei der Wiedergabe wenigstens zwei Programme parallel liefern, die unabhängig voneinander wiedergegeben werden.

15. Fernseh-Empfangsdekoder, dadurch gekennzeichnet, daß er in seinem Gehäuse eine Vorrichtung zur Aufzeichnung und Wiedergabe nach einem der Ansprüche 8 bis 14 enthält.

16. Fernsehempfänger, dadurch gekennzeichnet, daß er eine Vorrichtung zur Aufzeichnung und Wiedergabe nach einem der Ansprüche 8 bis 14 enthält.

## Claims

1. Process for recording and reading audio and/or video information broadcast in the form of individual programmes via one or more channels over the airwaves, by satellite or by cable network, consisting in:
- selecting one or more broadcasting channels to be received,
- coding the signals received into digital,
- recording the coded digital signals on a recording medium of large capacity,
- allocating an indexation on the recording medium for each individual programme recorded,
- creating at least one menu of recorded programmes,
- selecting one or more programmes on the basis of a menu of recorded programmes which is displayed on a display screen,
- reading the selected programme or programmes,
- processing the digital reading signals for the programme or programmes selected, and
- reproducing the corresponding audio and/or video information,
characterized in that it consists in rendering the recording and reading steps independent of one another, so as to allow the reading of a recorded programme whilst recording one or more other programmes.

2. Process according to Claim 1, characterized in that it consists in entering an access code so as to allow the reading of at least one of the recorded programmes.

3. Process according to Claim 1 or 2 and in the case where at least some of the programmes received are encrypted, characterized in that it consists in:
- recording the said programmes in their encrypted form,
- entering a specific code so as to allow the decrypting of at least certain of the said programmes during reading with a view to their sound reproduction and/or visual reproduction.

4. Process according to one of the preceding claims, characterized in that it consists in allocating a locking key so as to prevent the direct erasure of certain of the recorded programmes.

5. Process according to one of the preceding claims, characterized in that it consists in recording and reading video programmes and/or audio programmes.

6. Process according to one of the preceding claims, characterized in that it consists in recording several programmes in parallel and simultaneously on the recording medium.

7. Process according to Claim 6, characterized in that it consists in reproducing several programmes simultaneously.

8. Recording and reading apparatus specially designed for implementing the process according to one of the preceding claims, comprising:
- means for adjusting frequencies (1) allowing the reception of one or more broadcasting channels simultaneously,
- means (3) of digital coding of the signals received,
- means of recording and reading the coded digital signals,
- means (8, 9) for processing the signals arising from the reading head with a view to their sound reproduction and/or visual reproduction,
characterized in that it comprises:
- control means (5) making it possible to manage the recording and reading of the programmes independently,
and in that the means (4) for recording and reading the coded digital signals comprises a recording medium (4a) in the form of at least one magnetic tape with N parallel longitudinal tracks (N>2), a magnetic recording matrix head composed of N X M recording elements (M>1), and a magneto-optical reading head capable of reading N tracks simultaneously.

9. Apparatus according to Claim 8, characterized in that it comprises access control means (5) for allowing the reading of at least a part of the programmes recorded after identification of an access code.

10. Apparatus according to Claim 8 or 9, characterized in that it comprises means ensuring the decrypting (8) of certain of the programmes recorded in encrypted form after identification of a specific code.

11. Apparatus according to one of Claims 8 to 10, characterized in that the control means (5) generate a locking key, when requested by the user, to prevent the direct erasure of certain of the recorded programmes.

12. Apparatus according to one of Claims 8 to 11, characterized in that it comprises a touch screen (7) on which may be displayed one or more menus generated by the control means (5) indicating the titles and possibly the topics of the programmes recorded, the user being able to select and control the apparatus directly via the touch screen.

13. Apparatus according to one of Claims 8 to 12, characterized in that the magnetic recording tape (4a) can be extracted from the apparatus.

14. Apparatus according to one of Claims 8 to 13, characterized in that the means (9) for processing the reading signals provide in a parallel manner at least two programmes which are reproduced independently of one another.

15. Television reception decoder characterized in that it incorporates within its box, a recording and reading apparatus according to one of Claims 8 to 14.

16. Television set characterized in that it incorporates a recording and reading apparatus according to one of Claims 8 to 14.
